Europäisches Patentamt

European Patent Office

Office européen des brevets

(11) Veröffentlichungsnummer: **0 313 036 B1**

# EUROPÄISCHE PATENTSCHRIFT

(45) Veröffentlichungstag der Patentschrift:
24.04.91 Patentblatt 91/17

(51) Int. Cl.$^5$: **C22C 9/04, F16D 23/04**

(21) Anmeldenummer: **88117437.9**

(22) Anmeldetag: **19.10.88**

(54) Verwendung einer Kupfer-Zink-Legierung.

y

(30) Priorität: **22.10.87 DE 3735783**

(43) Veröffentlichungstag der Anmeldung:
**26.04.89 Patentblatt 89/17**

(45) Bekanntmachung des Hinweises auf die
Patenterteilung:
**24.04.91 Patentblatt 91/17**

(84) Benannte Vertragsstaaten:
**DE ES FR GB IT SE**

(56) Entgegenhaltungen:
**EP-A- 0 175 872**
**DE-A- 2 830 459**
**DE-C- 456 342**
**DE-C- 582 842**

(73) Patentinhaber: **DIEHL GMBH & CO.**
**Stephanstrasse 49**
**W-8500 Nürnberg (DE)**

(72) Erfinder: **Gaag, Norbert**
**Buchenstrasse 1**
**W-8566 Leinburg (DE)**
Erfinder: **Ruchel, Peter, Dr.**
**Kattowitzerstrasse 15**
**W-8560 Lauf (DE)**

EP 0 313 036 B1

**Beschreibung**

Die Erfindung bezieht sich auf die Verwendung einer Kupfer-Zink-Legierung für Halbzeuge und Halbfabrikate, insbesondere Synchronringe.

Für Synchronringe in Kraftfahrzeuggetrieben sind ein hoher Reibwert und ein hoher Verschleißwiderstand als kennzeichnende Größen von besonderer Bedeutung. Ein hoher Reibwert ist für schnelles und präzises Schalten, das heißt den Schaltkomfort, ein hoher Verschleißwiderstand für die Standfestigkeit des Synchronringes wesentlich.

Aus dem Stand der Technik sind bereits eine Vielzahl von Kupfer-Zink-Legierungen für Synchronringe bekanntgeworden. Diese Legierungen sind jedoch zu einem großen Teil den immer mehr gestiegenen Anforderungen an die Getriebe und deren Synchronringe aufgrund erhöhter Leistung der Motoren nicht mehr gewachsen. Es war daher Aufgabe der Erfindung, eine Kupfer-Zink-Legierung vorzuschlagen, deren Reibwert gegenüber bisher bekannten Legierungen höher liegt, deren Verschleißbeständigkeit zumindest gleich oder höher als die der bisherigen Legierungen ist und welche billiger herzustellen ist als die bisher am nächsten kommenden Legierungen aus dem Stand der Technik.

Zur Lösung der gestellten Aufgabe werden die im Anspruch 1 gekennzeichneten Merkmale vorgeschlagen weitere ausführungsformen der erfindungsgemäß verwendeten Legierung sind in den abhängigen Ansprüchen erwähnt.

Für die vorgeschlagene Legierung ist von besonderer Bedeutung die Freiheit von Kobalt, der gegenüber vergleichbaren Legierungen sehr hohe Anteil an Nickel sowie die vorzugsweise Freiheit von Mangan. Im Sinne der Erfindung können jedoch auch Zugaben von bis zu 2% Mangan in Sonderfällen vorgesehen werden, bei denen eine Erhöhung des Verschleißwiderstandes gefordert wird, eine geringfügige Reduzierung des Reibungsbeiwertes hingegen toleriert werden kann.

Ein wesentliches Merkmal der vorgeschlagenen Legierung ist ferner das Vorliegen einer intermetallischen Verbindung aus Nickel und Silizium, nämlich von Nickel-Siliziden, sowie eines Anteils an freiem Nickel. Diese Nickel-Silizide liegen in abgerundeter Form vor. Diese Nickel-Silizide haben ein geringere Härte als Mangan- oder Eisensilizide und verursachen trotz ihres guten Verschleißwiderstandes einen geringeren Werkzeugverschleiß bei der Bearbeitung der Synchronringe.

Als vorteilhaft bei der vorgeschlagenen Legierung ist ferner zu vermerken, daß Eisen nicht als Muß-Komponente vorgesehen ist. Ein geringer Eisenanteil ist jedoch zulässig.

Als Stand der Technik kommt dem Anmeldungsgegenstand am nächsten eine Legierung, wie sie in der DE-PS 28 30 459 besprochen ist. Die dort erläuterte Legierung hat eine Zusammensetzung von 45 bis 75% Kupfer, 2 bis 7% Aluminium, 0,1 bis 2% Eisen, 1 bis 5% Nickel, 0,5 bis 2% Silizium, 0,1 bis 2% Kobalt, Rest Zink. Eine tatsächlich nach diesem Patent hergestellte Legierung besitzt eine Zusammensetzung von 58,5% Kupfer, 31,5% Zink, 0,7% Eisen, 3% Nickel, 0,8% Silizium, 4% Aluminium und 1,5% Kobalt. Auch diese Legierung, welche für Synchronringe einsetzbar ist, gründet sich auf die Eigenschaften der Nickel-Silizide. Zusätzlich sind bei dieser bekannten Legierung jedoch auch Kobalt-Silizide vorhanden, die zu nestartiger Anhäufung neigen. Dadurch wird die Bearbeitbarkeit der Legierung beeinträchtigt.

Gegenüber dieser bekannten Legierung weist die gemäß der Erfindung vorgeschlagene Legierung einen geringfügig erhöhten Reibungsbeiwert bei etwa gleichem Verschleißwiderstand auf, der hervorstechende Unterschied besteht jedoch darin, daß die vorgeschlagene Legierung kein Kobalt aufweist und daher um etwa 10% billiger herstellbar ist. Der erhöhte Nickelanteil macht diesen Vorteil nicht wett, da Nickel durch billige Neusilberschrotte preiswert zu erhalten ist. Die Freiheit von Kobalt macht die vorgeschlagene Legierung nicht nur billiger, sondern ermöglicht es wegen der fehlenden Neigung zur Bildung von Silizidnestern, sie einfacher zu gießen.

Gegenüber den am Markt befindlichen Standardlegierungen weist die vorgeschlagene Legierung eine Verbesserung des Reibungsbeiwertes von etwa 20% und eine Verbesserung des Verschleißwiderstandes von etwa 30% auf, ohne daß eine Verteuerung in der Herstellung auftritt.

In der Zusammensetzung kommt der vorgeschlagenen Legierung ferner jene aus der DE-AS 1 205 285 nahe, bei welcher 58% Kupfer, bis zu 50% Zink, bis zu 11% Aluminium, bis zu 6,6% Mangan, bis 2% Silizium, bis 30% Nickel sowie bis 5% Eisen und 1% Blei zugelassen sind. Diese bekannte Legierung ist nicht für Synchronringe sondern für Gleitlager und dergleichen vorgesehen, also bei solchen Anwendungen, wo es auf einen niedrigen Reibungsbeiwert ankommt. Aufgrund der festgelegten Mn/Si Verhältnismengen und der sich aus den in der Patentschrift angegebenen Beispielen ergebenden tatsächlichen Zusammensetzung ist aber ersichtlich, daß dort Nickel-Silizide nicht auftreten können, da das in geringem Umfange vorhandene Silizium alles durch Mangan abgebunden wird. Welche Eigenschaften die dort angegebene Legierung mit 12% Nickel hat, wurde nicht ausgeführt. Der Fachmann konnte aus der Beschreibung dieser bekannten Legierung somit keinen Hinweis auf die erfindungsgemäße Verwendung sowie darauf entnehmen, daß ein hoher Anteil an Nickel-Siliziden entscheidend für die geforderten Eigenschaften der erfindungsgemäßen Legierung sein sollen.

Aus der DE-OS 1 558 817 ist weiterhin eine Kupfer-Zink-Legierung für die Anwendung bei Synchronringen bekannt, bei welcher zwischen 0 und 45% Zink, 0,1 bis 12% Aluminium, 0,1 bis 14% Mangan, 0 bis 2,5% Silizium, 0,1 bis 6% Nickel, 0 bis 6% Eisen und 0 bis 3% Blei, Rest Kupfer vorgesehen sind. Bereits aus der Tatsache daß Silizium eine Wahlkomponente darstellt und in den aufgeführten Beispielen Silizium nur mit sehr geringen Anteilen vertreten ist, ist zu entnehmen, daß Silizide offensichtlich keinen wesentlichen Bestandteil darstellen. Bei Vorliegen von Silizium würden sich außerdem wegen des Vorhandenseins von Mangan vorwiegend Mangansilizide bilden. Dies ergibt sich aufgrund der größeren Bindungswirkung von Mangan mit Silizium gegenüber Nickel mit Silizium. Die bekannte Legierung kann daher keine Anregung für die Erfindung geben.

Sehr ähnlich wie bei der vorgenannten bekannten Legierung sind die Verhältnisse bei der Legierung gemäß DE-PS 1 154 643. Auch dort ist eine Verwendung für Synchronringe angegeben, das Element Silizium ist auch hier nur Wahlkomponente oder liegt nur in geringen Beimengungen vor, so daß auch hier Silizide keine oder nur eine sehr untergeordnete Rolle für die Verschleißfestigkeit spielen. Beide bekannte Legierungen setzen im übrigen Mangan als Mußkomponente voraus.

Auch die DE-OS 2 919 478 bezieht sich auf die Verwendung bei Synchronringen und weist einen hohen Mangangehalt, einen mittleren Siliziumgehalt, hingegen einen äußerst geringen Nickelgehalt auf. Auch in diesem Falle können daher Nickelsilizide nicht auftreten, da alles Silizium durch das in hohem Überschuß vorliegende Mangan abgebunden wird.

Gegenüber dem gesamten Stand der Technik ist als wesentliches Merkmal der Erfindung der hohe Gehalt an Nickelsiliziden festzuhalten, welcher wenigstens 4%, vorzugsweise jedoch 6% betragen sollte. Außerdem ist ein Anteil an freiem Nickel für die guten Eigenschaften der Legierung wichtig. Andererseits wird dem Gehalt an freiem Nickel durch Ansteigen der Schmiedetemperatur nach oben eine Grenze gesetzt. Hinzu kommt, daß man wegen der hohen legierungsmäßigen Wirksamkeit des Nickels den Nickelanteil nach oben begrenzen muß, wenn man nicht das Gebiet der gut verarbeitbaren Messinglegierungen verlassen will.

In den nachfolgenden Tabellen sollen Beispiele einer ausgeführten Legierung im Verhältnis zu Vergleichslegierungen sowie typische Kenngrößen angegeben werden.

Tabelle 1

Zusammensetzung der Versuchslegierung

(Angaben in Gewichtsprozent)

| Lfd. Nr. | Cu | Zn | Fe | Ni | Si | Al | Co | Mn |
|---|---|---|---|---|---|---|---|---|
| 1 | 58,5 | 31,5 | 0,7 | 3,0 | 0,8 | 4,0 | 1,5 | – |
| 2 | 57,9 | 29,0 | 0,7 | 3,0 | 0,8 | 4,0 | 1,5 | 3,0 |
| 3 | 58,0 | Rest | 0,3 | – | 0,6 | 1,6 | – | 2,0 |
| 4 | 58,3 | 29,5 | 0,7 | 6,0 | 1,44 | 4,0 | – | – |

| Lfd. Nr. | Härte ausgelagert HB | Reibwert (Mittelwerte) | Verschleißwert km/g (Mittelwerte) |
|---|---|---|---|
| 1 | 222 | 0,116 – 0,131 | 186 – 366 |
| 2 | 218 | 0,119 – 0,130 | 276 – 441 |
| 3 | 167 | 0,099 – 0,128 | 162 – 237 |
| 4 | 222 | 0,125 – 0,134 | 202 – 240 |

Die Legierung Nr. 1 bezieht sich auf eine auf dem Markt befindliche Legierung entsprechend der eingangs genannten DE-PS 28 30 459. Die Legierung 2 bezieht sich auf den gleichen Legierungstyp jedoch mit einem Zusatz von 3% Mangan. Die Legierung Nr. 3 stellt eine Standardlegierung der Art CuZn 40 Al 2 dar mit einer Zusammensetzung von 58% Kupfer, 1,6% Aluminium, 2% Mangan, 0,6% Silizium, kein Nickel, 0,3% Eisen und 0,6% Blei, Rest Zink. Die Legierung 4 schließlich ist die erfindungsgemäße Legierung in der bevorzugten Zusammensetzung.

Aus den obenstehenden Meßwerten ergibt sich, daß die erfindungsgemäße Legierung die gleiche Härte aufweist wie Legierung Nr. 1, daß sie in ihrem Reibwert etwas höher liegt als die Legierung 1 und in ihren Verschleißwerten vergleichbar ist wie Legierung 1, jedoch weniger streut als diese. Man erkennt aus den obenstehenden Tabellen auch, daß die Legierung 2 in ihren Reibwerten nur geringfügig schlechter, in ihren Verschleißwerten hingegen deutlich besser ist als die erfindungsgemäße Legierung. Gegenüber den in ihren Kenndaten sehr guten Legierungen 1 und 2 ist die erfindungsgemäße Legierung im Reibwert besser, in den Verschleißwerten vergleichbar bzw. etwas schlechter, jedoch bei einer wesentlich geringeren Streubreite der Ergebnisse. Diese Ergebnisse werden mit der erfindungsgemäßen Legierung jedoch aufgrund des Wegfalls des Elementes Kobalt und damit mit deutlich geringeren Herstellkosten erzielt.

Aus den beiden Tabellen ergibt sich auch, daß die erfindungsgemäße Legierung gegenüber den am Markt befindlichen Standardlegierungen, von der ein typischer Vertreter die Legierung Nr. 3 ist, in jeder Hinsicht deutlich bessere Ergebnisse bei vergleichbaren Herstellkosten erzielt.

Die erfindungsgemäß vorgeschlagene Legierung wurde mit nachfolgendem Verfahren hergestellt. Die Schmelze wurde bei einer Gießtemperatur von 1050 bis 1100°C im Strangguß gegossen. Anschließend wurden die erhaltenen Bolzen bei einer Temperatur von 600 bis 800°C, vorzugsweise 720°C warm verformt und anschließend in Luft abgekühlt. Nachfolgend wurden die Proben bei einer Temperatur zwischen 600 und 800°C, vorzugsweise bei 720°C geschmiedet und nachfolgend wieder an Luft abgekühlt. Schließlich erfolgte ein Auslagern der Proben bei einer Temperatur zwischen 200 und 300°C über einen Zeitraum von 5 bis 20 Stunden, wobei sich im Hinblick auf die erzielbare Härte eine Temperatur von 250°C über 10 Stunden als vorteilhaft erwiesen hat. Dabei wurde eine Härtesteigerung von 16 bis 17 HB für die erfindungsgemäße Legierung gegenüber dem schmiedeharten Stand erreicht. Bei dieser Temperatur betrug der α-Anteil 1%. Das Gefügebild zeigte runde gleichmäßig verteilte Silizide, daneben feine Ausscheidungen, die teilweise unzusammenhängend an den Korngrenzen angelagert sind.

## Ansprüche

1. Verwendung einer Kupfer-Zink-Legierung, bestehend aus 50 bis 65% Kupfer, 1 bis 6% Aluminium, 0,5 bis 5% Silizium, 5 bis 8% Nickel, sowie wahlweise 0 bis 1% Eisen, 0 bis 2% Blei, 0 bis 2% Mangan (Angaben in Gewichtsprozenten), Zink als Rest, sowie unvermeidbare Verunreinigungen, wobei das Nickel überwiegend in intermetallischer Verbindung mit Silizium (Nickel-Silizide) vorliegt, die in abgerundeter Form fein und gleichmäßig verteilt vorliegen, für Halbzeuge und Halbfabrikate, die neben guter Belastbarkeit und hohem Verschleißwiderstand einen gleichmäßig hohen Reibungsbeiwert besitzen, insbesondere für Synchronringe.

2. Verwendung einer Kupfer-Zink-Legierung nach Anspruch 1, bestehend aus
55 bis 60% Kupfer, 3 bis 5% Aluminium,
1 bis 3% Silizium, 6 bis 7% Nickel,
0 bis 1% Eisen, 0 bis 1% Blei, Rest Zink, für den Zweck nach Anspruch 1.

3. Verwendung einer Kupfer-Zink-Legierung nach Anspruch 2, bestehend aus
58% Kupfer, 4% Aluminium, 1,5% Silizium,
6% Nickel, 0,7% Eisen, Rest Zink, für den Zweck nach Anspruch 1.

4. Verwendung einer Kupfer-Zink-Legierung nach Anspruch 2, bestehend aus
58% Kupfer, 4% Aluminium, 1,5% Silizium,
6% Nickel, Rest Zink,
für den Zweck nach Anspruch 1.

## Claims

1. Use of a copper/zinc alloy, consisting of 50 to 65% copper, 1 to 6% aluminium, 0.5 to 5% silicon, 5 to 8% nickel, as well as optionally 0 to 1% iron, 0 to 2% lead, 0 to 2% manganese (data in percent by weight), zinc as the remainder, as well as unavoidable impurities, in which respect the nickel is predominantly present in intermetallic combination with silicon (nickel silicide), which in rounded-off form are present in a finely and uniformly distributed manner, for semifinished articles and semimanufactured articles, which in addition to good loadability and high resistance to wear have a uniformly high friction value, in particular for synchronising rings.

2. Use of a copper/zinc alloy according to claim 1, consisting of 55 to 60% copper, 3 to 5% aluminium, 1 to 3% silicon, 6 to 7% nickel, 0 to 1% iron, 0 to 1% lead, the remainder zinc, for the purpose according to claim 1.

3. Use of a copper/zinc alloy according to claim 2, consisting of 58% copper, 4% aluminium, 1.5% silicon, 6% nickel, 0.7% iron, the remainder zinc, for the purpose according to claim 1.

4. Use of a copper/zinc alloy according to claim 2, consisting of 58% copper, 4% aluminium, 1.5% silicon, 6% nickel, the remainder zinc, for the purpose according to claim 1.

**Revendications**

1. Utilisation d'un alliage cuivre-zinc, se composant de 50 à 65% de cuivre, 1 à 6% d'aluminium, 0,5 à 5% de silicium, 5 à 8% de nickel, ainsi qu'au choix de 0 à 1% de fer, 0 à 2% de plomb, 0 à 2% de manganèse (valeurs indiquées en pourcentage en poids), le reste étant du zinc, ainsi que des impuretés inévitables, le nickel se présentant principalement sous forme d'une liaison intermétallique avec le silicium (siliciure de nickel), en étant répartis finement et régulièrement sous une forme arrondie, pour des demi-produits et des produits demi-finis, qui présentent, outre une bonne capacité de charge et une résistance à l'usure élevée, un coefficient de frottement constant élevé, en particulier pour des bagues de synchronisation de boîtes de vitesses.

2. Utilisation d'un alliage cuivre-zinc selon la revendication 1, se composant de 55 à 60% de cuivre, 3 à 5% d'aluminium, 1 à 3% de silicium, 6 à 7% de nickel, 0 à 1% de fer, 0 à 1% de plomb, le reste étant du zinc, pour l'application selon la revendication 1.

3. Utilisation d'un alliage cuivre-zinc selon la revendication 2, se composant de 58% de cuivre, 4% d'aluminium, 1,5% de silicium, 6% de nickel, 0,7% de fer, le reste étant du zinc, pour l'application selon la revendication 1.

4. Utilisation d'un alliage cuivre-zinc selon la revendication 2, se composant de 58% de cuivre, 4% d'aluminium, 1,5% de silicium, 6% de nickel, le reste étant du zinc, pour l'application selon la revendication 1.